# EUROPEAN PATENT SPECIFICATION

(11) **EP 4 202 276 B1**
(45) Date of publication and mention of the grant of the patent: **30.07.2025**
(21) Application number: 22215351.2
(22) Date of filing: 21.12.2022
(51) Int. Cl.: F16L 9/147, F16L 59/14

(54) **A PIPE PROTECTION ARRANGEMENT AND USE OF SUCH ARRANGEMENT**
ROHRSCHUTZANORDNUNG UND VERWENDUNG SOLCHER ANORDNUNG
AGENCEMENT DE PROTECTION DE TUYAU ET UTILISATION D'UN TEL AGENCEMENT

(30) Priority: 22.12.2021 SE 2151592
(43) Date of publication of application: 28.06.2023
(73) Proprietor: Vattenfall AB, 169 92 Stockholm (SE)
(72) Inventor: KADUREK, Petr, 29690 Gilten (DE)
(74) Representative: Zacco Sweden AB

(56) References cited:
- FR-A1- 2 879 715
- GB-A- 2 535 474
- US-A1- 2006 272 727

## Description

### Technical field

The present disclosure relates to a pipe protection arrangement for an offshore structure, an offshore structure and a method for connecting a pipe provided with a pipe protection arrangement to an offshore structure.

### Background

The undersea pipes are used in offshore structures to conduct fluids between the offshore structures and onshore plants. Such pipes can be pipelines, conduits, tubes, channels and hoses, which are made of a flexible material, such as polymers. Undersea pipes are exposed to the forces of nature to a large extent. They may therefore be arranged in a protective cover on the seabed. The protective cover is configured to protect the undersea pipe on the seabed and on the way to a connection unit, which is located in the offshore structure. In addition to the protective cover, additional protection may be needed on the seabed, such as stones and geotextile mat, against possible scouring. Additional shells or tubes may be arranged on the protective cover at the area where the pipe enters the offshore structure or an onshore plant.

The undersea pipe extends on the seabed and further through a wall opening or a connection entrance in the offshore structure and further to the connection unit. When the undersea pipe is to be connected into the offshore structure, the pipe is protected from over-bending and jamming during pull-in. Also, the pipe is protected against dynamic forces during the pull-in operation and afterwards. The installation of the pipe must also be fast and safe and have a low risk of failure.

A pipe laying vessel is used for installing the undersea pipe on the seabed and for the pull-in operation into the offshore structure for connecting the pipe to the connection unit. The installation of the pipe in the protective cover may be prepared on the deck of the pipe laying vessel. Further, the pipe protection system is flexible in order to facilitate the installation of the pipe and for the pull-in operation into the offshore structure.

US2006/272727 discloses an insulated pipe-in-pipe assembly comprising at least one inner pipe, an outer pipe disposed around the at least one inner pipe so as to create an annular space between the outer and inner pipes, porous, resilient, compressible material disposed in the annular space, and a remnant of a container that previously was positioned in the annular space and previously held the compressible material in a volume less than the volume of the compressible material in the annular space.

GB 2 535 474 discloses a rigid pipe-in-pipe structure for subsea transportation of fluids that comprises inner and outer pipes defining a thermally-isolating annulus between them. Thermal insulation material is disposed in the annulus. The outer pipe is made of metal, preferably carbon steel. The inner pipe is a polymeric composite structure of bonded layers comprising a first, radially outer tubular polymeric electrically insulating layer, which may be of pure polymer, surrounding a second, composite layer comprising reinforcement fibres, preferably continuous carbon fibres, embedded in a polymer matrix. Conveniently the second layer is a heating layer in which the carbon fibres conduct electricity to heat the inner pipe.

FR 2 879 715 relates to a unitary underwater pipe element in particular to ensure a bottom-surface connection, consisting of a set of two coaxial pipe elements of the pipe in pipe type comprising an internal pipe element and an element of external pipe with an annular space between the two, preferably comprising a thermal insulation material in said annular space.

### Summary

A problem with the known solutions is that the protective cover do not provide a proper dynamic protection during operation and for problematic vibrations and movements. The flexibility of the protective cover needed for proper and easy installation of the pipes may during operation result in wear and fatigue of the protective cover due to movements of the pipe together with the protective cover. Typically, there is a potential risk that the protective cover brakes at the position where the pipe entering the offshore structure or similar structure and at the position where the pipe rises from the seabed in order to entering the offshore structure.

It is an object of the present disclosure to mitigate, alleviate or eliminate one or more of the above-identified deficiencies and disadvantages in the prior art and solve at least the above mentioned problem.

According to an aspect there is provided a pipe protection arrangement for an offshore structure. The arrangement comprising a flexible cover element configured to at least partly surround a pipe, wherein the flexible cover element is configured to define a space between an inner surface of the flexible cover element and the pipe. The pipe protection arrangement further comprises a stiffener element in the defined space between the inner surface of the flexible cover element and the pipe, wherein the stiffener element is transformable from a flexible condition to a stiff condition.

Such a pipe protection arrangement provides a proper dynamic protection during operation and minimizes problematic movements. The pipe protection arrangement has the flexibility needed for proper and easy installation of the pipes on the seabed and to the offshore structure. After installation, the stiffener element is transformable from a flexible condition to a stiff condition. The stiff condition of the stiffener element results in restricted movements of the flexible cover element and also of the pipe, which reduces wear and fatigue of the flexible cover element and the pipe. The reduction of wear and fatigue of the flexible cover element and the pipe reduces the risk that the pipe protection system brakes at the position where the pipe entering the structure and at the position where the pipe rises from the seabed in order to entering the structure.

The pipe may be a pipeline, conduit, tube, channel or a hose. The pipe may be made of a polymer material, such as plastic or rubber. Further, the pipe may be made of steel. Such steel pipe may due to its extension have flexible characteristics. The pipe may be extruded or 3D printed. The pipe may have a cylindrical shape, with an cylindrical inner diameter configuring a channel for conveying a fluid, such as liquid and gas. The fluid may be for instance hydrogen, oil, ammonia, water, natural or biological gas. The pipe may have an outer diameter. The pipe may have a wall thickness defined by the inner and outer diameters. The pipe may be configured to resist pressures or high pressures from the fluid conveyed within the pipe. The pipe protection arrangement provides an easy installation using pipe laying vessels since the pipe protection arrangement is flexible for pull-in operation during installation. After installation the pipe protection arrangement shall be stiff, strong and with minimal movements to withstand the environmental influence and protect the pipe. The desired stiffness of the stiffening element in the stiff condition may be controlled. The transformable characteristics of the stiffener element from the flexible condition to the stiff condition also results in that pipes provided with the flexible cover element of a considerable length can be installed on the seabed and to the offshore structure. A communication arrangement, such as a signal cable or fiber may be arranged within the pipe. The pipe may be fluidly connected to an offshore structure and to an onshore plant. The pipe may be fluidly connected between offshore structures.

The pipe protection arrangement is configured to protect the pipe from external influence, which may lead to fatigue and braking of the pipe. The pipe protection arrangement is configured to constitute a support for the pipe along its extension on the seabed and in to the wind turbine or substation structure. The pipe protection arrangement is configured to constitute a support for the pipe during handling and installation of the pipe on the seabed and to the wind turbine or substation structure.

The offshore structure may be a monopile for a wind turbine, configured to be installed in a seabed. However, the offshore structure may be any type of structure at sea, which should be connected to a pipe. The offshore structure may thus be platform arranged on a monopile. The offshore structure may be floating platform. The area of the seabed adjacent to the offshore structure may be reinforced. The reinforcement of the seabed may have a flat configuration and extend above the surface of the seabed.

The flexible cover element is configured to at least partly surround the pipe. The flexible cover element may comprise a shell or a jacket. A number of shells may together constitute the flexible cover element. The flexible cover element may surround the pipe in the circumferentially direction of the pipe. The pipe has a length, which exceeds the length of the flexible cover element. The flexible cover element may be of any type of material having flexible properties and also properties to withstand the aggressive environment at the seabed. The flexible cover element may be made of a polymer material, such as plastic or rubber. Further, the flexible cover element may be made of steel or a combination of steel and a polymer. The flexible cover element may be extruded or 3D printed.

The defined space is created between the inner surface of the flexible cover element and the pipe. The defined space has a shape defined by the shape of the flexible cover element and the pipe. The defined space may have a cylinder shape. The defined space is configured to accommodate the stiffener element. The inner surface of the flexible cover element may be smooth or may have a texture.

The stiffener element may be any type of element that can be transformable from a flexible condition to a stiff condition. The stiffener element may thus be a mechanical, an electrical and/or a chemical element. The mechanical element may be transformable from a flexible condition to a stiff condition. The electrical element may be transformable from a flexible condition to a stiff condition. The chemical element may be transformable from a flexible condition to a stiff condition. In the flexible condition the stiffener element may be able to resist only moderate forces acting on the pipe or on the flexible cover element. In the stiff condition the stiffener element may be able to resist large forces acting on the pipe or on the flexible cover element. The transformation from the flexible condition to the stiff condition may be activated and performed in a controlled manner. The transformation from the flexible condition to the stiff condition may be activated and performed by mechanical, electrical and/or chemical means.

According to an example, an activating element is configured to stiffen the stiffener element. The stiffener element may be any type of element that can be transformable from a flexible condition to a stiff condition. The stiffener element may comprise the activating element. The stiffener element may together with the activating element be arranged or introduced in the defined space between the inner surface of the flexible cover element and the pipe. Alternatively or in combination, the activating element may be separated from the stiffener element, wherein the stiffener element first is introduced into the defined space, and wherein the activating element thereafter is added to the stiffener element for stiffen the stiffener element. The stiffener element may thus be a mechanical, an electrical and/or a chemical element. The mechanical stiffener element may be transformable from a flexible condition to a stiff condition by an activating element such as an actuator acting on the mechanical element with a force. The mechanical stiffener element may be a wire, rod and/or a spring. The electrical stiffener element may be transformable from a flexible condition to a stiff condition by an activating element, such as a power source for electric power. The electrical stiffener element may be an electro magnet. The electrical stiffener element may be an electrically conductive substance, which may be transformable from a flexible condition to a stiff condition when exposed to the activating element, such as electric power. The chemical stiffener element may be transformable from a flexible condition to a stiff condition, which may be activated by an activating element, such as a curable substance acting on the chemical stiffener element.

According to an example, the stiffener element comprises a curable substance as an activating element for transforming the stiffener element to the stiff condition. The curable substance may be selected for controllable curing of the stiffener element. During the installation of the pipe on the seabed and to the offshore structure the curing of the stiffener element slowly takes place. The curing process is completed after the installation of the pipe. Thus, the pipe protection arrangement will have the flexibility needed for proper and easy installation of the pipe on the seabed and to the offshore structure, and after the installation the stiffener element will be transformed by the curable substance to the stiff condition by curing. The stiffener element thus comprises a curable substance and is transformable from a flexible condition to a stiff condition by curing. The curable substance may be the activating element for transforming the stiffener element from the flexible condition to the stiff condition. The stiffener element may together with the curable substance be arranged or introduced in the defined space between the inner surface of the flexible cover element and the pipe. Alternatively or in combination, the curable substance may be separated from the stiffener element, wherein the stiffener element first is introduced into the defined space, and wherein the curable substance thereafter is added to the stiffener element for stiffen the stiffener element.

According to an example, the stiffener element is a shotcrete, a glass fibre and/or a carbon fibre reinforcement. Thermal properties, curing time and desired stiffness could be easily controlled when using shotcrete, glass fibre and/or carbon fibre reinforcement as stiffener element. The stiffener element may thus comprise a shotcrete, a glass fibre and/or a carbon fibre reinforcement, which by an activating element, such as a curable substance, is curable to a stiff condition.

According to an example, the stiffener element is a mechanical element and/or an electrical element. The mechanical stiffener element may be transformable from a flexible condition to a stiff condition by an activating element such as an actuator acting on the mechanical element with a force. The mechanical element may be a wire, rod and/or a spring. The electrical stiffener element may be transformable from a flexible condition to a stiff condition by an activating element, such as a power source for electric power. The electrical element may be an electro magnet. The electrical element may be an electrically conductive substance, which may be transformable from a flexible condition to a stiff condition when exposed to the activating element, such as electric power.

According to an example, the flexible cover element comprises a flexible tube. The flexible tube is configured to surround the pipe in the circumferentially direction of the pipe. The pipe has a length, which exceeds the length of the flexible tube. The flexible tube may be of any type of material having flexible properties and also properties to withstand the aggressive environment at the seabed. The flexible tube may thus be made of a polymer material, such as plastic or rubber. Further, the flexible tube may be made of steel or a combination of steel and a polymer.

According to an example, the defined space is arranged between the inner surface of the flexible tube and an outer surface of the pipe. The defined space has a shape defined by the shape of the inner surface of the flexible tube and the outer surface of the pipe. The defined space may have a cylinder shape. The defined space is configured to accommodate the stiffener element. The inner surface of the flexible tube may be smooth or may have a texture.

According to an example, two flexible tubes are arranged in a concentric configuration to each other, and wherein the defined space is arranged between the inner surface of an outer flexible tube and an outer surface of an inner flexible tube. This configuration of the two tubes defines a space between the tubes, which may accommodating the stiffener element. The volume of the defined space may be controlled by selecting the inner diameter of the outer flexible tube and/or the outer diameter of the inner flexible tube. Distance elements may be arranged in the defined space between the two tubes. The distance elements may have a shape which affects the shape of the defined shape.

According to an example, the inner flexible tube has an inner diameter, which is larger than an outer diameter of the pipe. This configuration allows movement of the pipe within the inner flexible tube.

According to an aspect there is provided an offshore structure, connected to a pipe comprising a pipe protection arrangement, wherein the offshore structure comprises a monopile configured to be installed in a seabed. The offshore structure may be a monopile for a wind turbine, configured to be installed in a seabed. However, the offshore structure may be any type of structure at sea, which should be connected to a pipe. The pipe may convey fluid from and to the offshore structure and/or equipment arranged at the offshore structure. The pipe may extend through a wall opening in the monopile to a connection unit within the monopile. The wall opening in the monopile may be arranged at a height within a range of about 3,5 meters to about 5 meters above the seabed. The wall opening in the monopile may however be arranged at a height outside this range. Further, the wall opening may be configured to receive the pipe under an angle of about 40° to the monopile from the side of the seabed diagonally upwards. The wall opening may however be configured to receive the pipe under a different angle than 40°. Since the pipe protection arrangement is configured to constitute a support for the pipe along its extension on the seabed, from the seabed and further through the wall opening in the monopile, the wall opening in the monopile may be arranged at a height above this range and the wall opening may be configured to receive the pipe under a different angle than 40°.

According to an aspect, a platform may connected to the monopile. The platform may be a working platform, which serves as a working area during construction of the wind turbine and during service, maintenance and repair work of the wind turbine. The platform may also comprise a connection unit for the pipe. The connection unit may be a part of equipment for handling fluid to be conveyed by the pipe.

According to an aspect there is provided a method for connecting a pipe provided with a pipe protection arrangement to an offshore structure. The method comprises the steps of insertion the pipe in a flexible cover element, connecting the pipe to the offshore structure, and stiffening the flexible cover element by a stiffener element. The insertion the pipe in a flexible cover element may be performed at a pipe laying vessel, which is used for installing the undersea pipe on the seabed and for the pull-in operation into the offshore structure for connecting the pipe to the connection unit. The installation of the pipe in the flexible cover element may be prepared on the sea deck of the pipe laying vessel. At this step, the flexible cover element is allowed to flex and bend in order to facilitate the installation of the pipe and for the pull-in operation into the offshore structure. The step of connecting the pipe to the offshore structure comprises a mechanical connection by forwarding the pipe with the flexible cover element from the pipe laying vessel, to the offshore structure and to a connection unit at the offshore structure, which may be arranged within the offshore structure. At the connection unit, the pipe is fluidly connected to the offshore structure and/or equipment at the offshore structure. Such equipment may be an equipment for handling fluid to be conveyed by the pipe. The step of stiffening the flexible cover element by a stiffener element may be performed within or after a predetermined time or a predetermined time interval. The transformation from the flexible condition to the stiff condition may be activated and performed in a controlled manner. The transformation from the flexible condition to the stiff condition may be activated and performed by mechanical, electrical and/or chemical means. The stiffener element may abut or bear on the inner surface of the flexible cover element. When the stiffener element transforms to the stiff condition, the flexible cover element cannot bend or flex. The stiffener element will be rigid in the stiff condition and will therefore prevent the flexible cover element to bend or flex. The flexible cover element will as a result assume a rigid state due to the rigid state of the stiffener element.

According to an example, the step of connecting the pipe to the offshore structure is preceded by the step of: insertion of a stiffener element in a defined space between an inner surface of the flexible cover element and the pipe. The stiffener element may be any type of element that can be transformable from a flexible condition to a stiff condition. The stiffener element may be a mechanical, an electrical and/or a chemical element, which is inserted into the defined space between an inner surface of the flexible cover element and the pipe. During insertion, the stiffener element may have a flexible condition. In case the stiffener element is a chemical element, such as a chemical substance or a composition of different chemical substances, the chemical element may be injected into the defined space.

According to an example, the step of stiffening the flexible cover element by a stiffener element comprises curing the stiffener element by a curable substance. The curable substance may be selected for controllable curing of the stiffener element. In this case the stiffener element is a chemical element, such as a chemical substance or a composition of different chemical substances. The curable substance may be injected into the defined space in which the stiffener element in form of a chemical element already has been injected. Alternatively, the chemical element may be blended with the curable substance before injecting them together into the defined space. During the installation of the pipe on the seabed and to the offshore structure the curing of the stiffener element slowly takes place. The curing process is completed within or after a predetermined time or a predetermined time interval. The curing process is completed after the installation of the pipe.

The present disclosure will become apparent from the detailed description given below. The detailed description and specific examples disclose examples of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above objects, as well as additional objects, features and advantages of the present disclosure, will be more fully appreciated by reference to the following illustrative and non-limiting detailed description of examples of the present disclosure, when taken in conjunction with the accompanying drawings.
Figure 1 schematically illustrates in a sectional view, a pipe protection arrangement for an offshore structure according to an example;
Figure 2 schematically illustrates a pipe with a pipe protection arrangement fluidly connected to an offshore structure and to an onshore plant.
Figures 3 - 4 schematically illustrate in views of perspective, pipe protection arrangements according to different examples;
Figures 5a and 5b schematically illustrate how stiffener elements are applied to a pipe protection arrangement according to an example; and
Figures 6a and 6b show flowcharts of a method according to an example.

### Detailed description

The present disclosure will now be described with reference to the accompanying drawings, in which examples of the disclosure are shown. The disclosure may, however, be embodied in other forms and should not be construed as limited to the herein disclosed examples. The disclosed examples are provided to fully convey the scope of the disclosure to the skilled person.

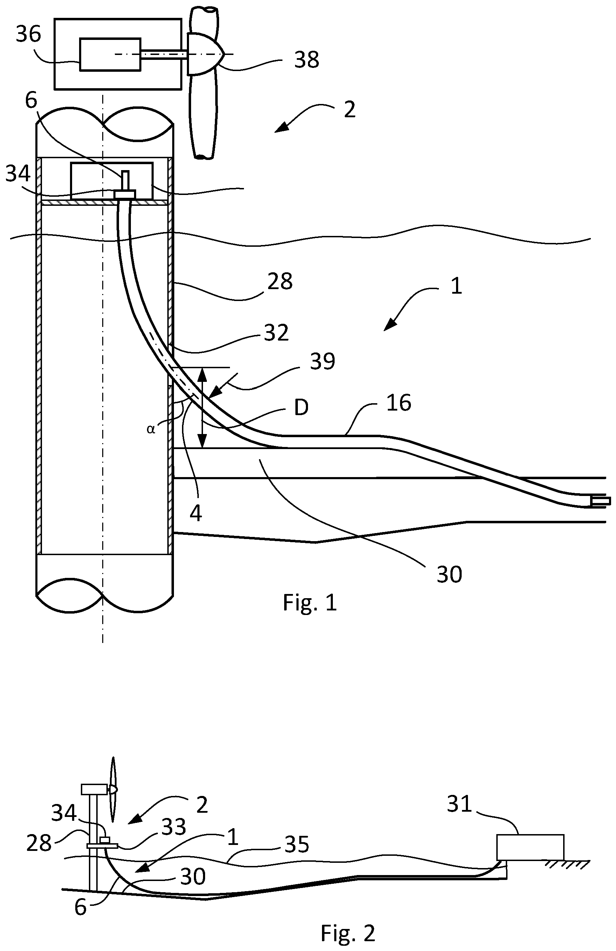

Figure 1 shows a pipe protection arrangement 1 for an offshore structure 2. The pipe protection arrangement 1 comprises a flexible cover element 4 configured to at least partly surround a pipe 6. The offshore structure 2 is a monopile 28 for a wind turbine installed in a seabed 30. The pipe 6 extends on and in the seabed 30 and further through a wall opening 32 in the monopile 28 to a connection unit 34 within the monopile 28. The pipe 6 is further connected to an electrical drive train 36 driven by the wind turbine 38. The wall opening 32 is situated at a distance D from the surface of the seabed 30, which results in a smooth curvature 39 of the pipe 6 and the flexible cover element 4. The wall opening 32 in the monopole 20 may be arranged at a height within a range of about 3,5 meters to about 5 meters above the seabed 30. Further, the wall opening 32 is configured to receive the pipe 6 under an angle α of about 40° to the monopole 20 from the side of the seabed 30 diagonally upwards.

Figure 2 schematically illustrates a pipe 6 with a pipe protection arrangement 1 fluidly connected to an offshore structure 2 and to an onshore plant 31. The monopile 28 of the offshore structure 2 is installed in the seabed 30. A platform 33 is connected to the monopile 28. The platform 33 is arranged on the monopile 28 above a water surface 35. The platform 33 comprises a connection unit 34 for the pipe 6. The connection unit 34 may be a part of equipment for handling fluid to be conveyed by the pipe 6.

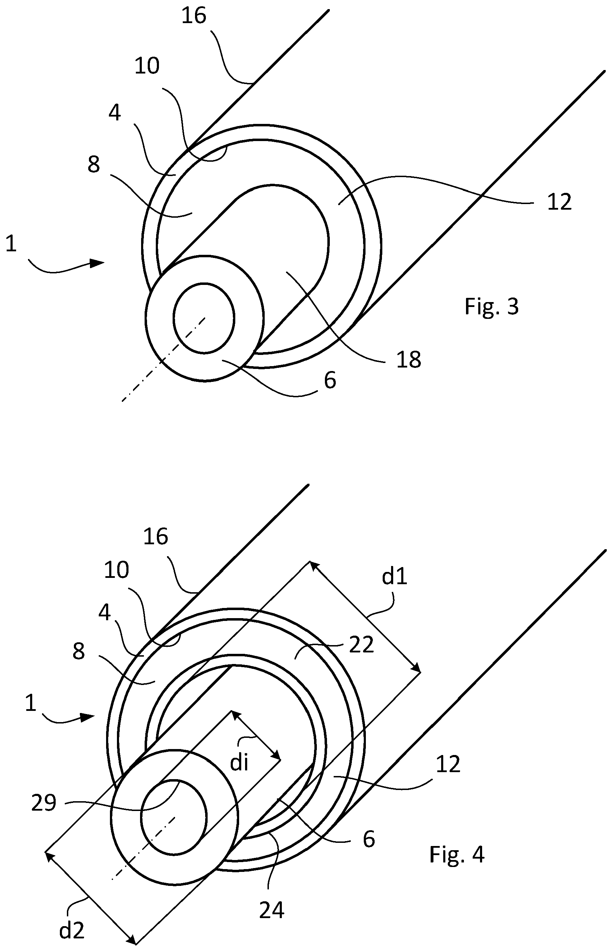

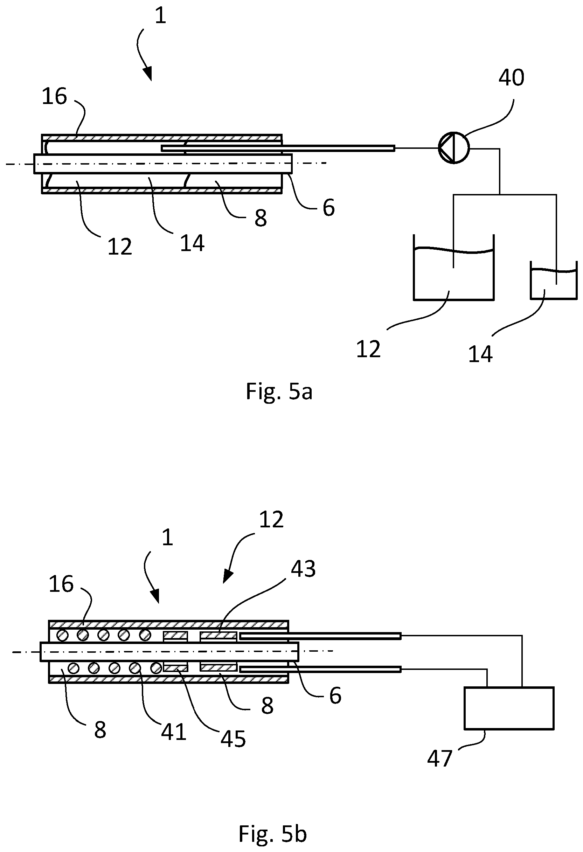

In fig. 3 the pipe 6 with the flexible cover element 4 and the stiffener element 12 is shown in a view of perspective. The flexible cover element 4 is configured to define a space 8 between an inner surface 10 of the flexible cover element 4 and the pipe 6. The pipe protection arrangement 1 further comprises a stiffener element 12 in the defined space 8 between the inner surface 10 of the flexible cover element 4 and the pipe 6. The stiffener element 12 according to the example in fig 3 is a chemical substance, such as a shotcrete, a glass fibre and/or a carbon fibre reinforcement. The stiffener element 12 is transformable from a flexible condition to a stiff condition. The stiffener element 12 may be transformable to the stiff condition by adding a curable substance 14 as an activating element (see fig. 5a). The flexible cover element 4 comprises a flexible tube 16 and the defined space 8 is arranged between the inner surface 10 of the flexible tube 16 and an outer surface 18 of the pipe 6.

In fig. 4 two flexible tubes 16, 20 are arranged in a concentric configuration to each other, and wherein the defined space 8 is arranged between the inner surface 10 of an outer flexible tube 16 and an outer surface 22 of an inner flexible tube 24. The inner flexible tube 24 has an inner diameter d1, which is larger than an outer diameter d2 of the pipe 6. The pipe 6 is provided with an inner diameter di configuring a channel 29 for conveying a fluid.

Fig. 5a shows in a schematic view how the stiffener element 12 in the form of a chemical substance is injected into the defined space 8. The curable substance 14 is injected into the defined space 8 together with the stiffener element 12. A pump 40 or feeder brings the stiffener element 12 and the curable substance from separate depots 42, 44 and injects the blended stiffener element 12 and the curable substance 14 into the space 8 defined between the flexible tube 16 and the pipe 6.

Fig. 5b shows in a schematic view how the stiffener element 12 in the form of a mechanical element and an electrical element arranged in the defined space 8. The mechanical element is a spring 41. The electrical element is an electro magnet 43. The spring 41 may be transformable from a flexible condition to a stiff condition by force from an actuator 45 acting as the activating element. The electro magnet 43 may be transformable from a flexible condition to a stiff condition by electric power from a power source 47 acting as the activating element.

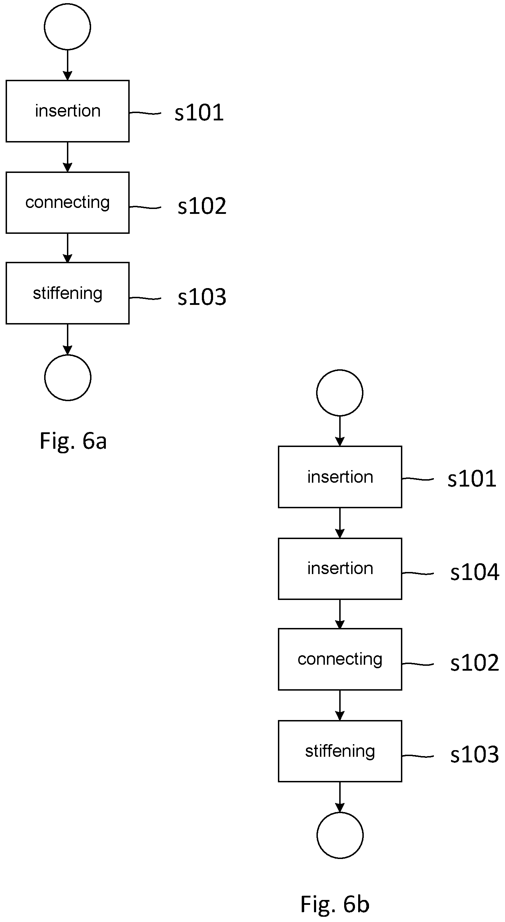

Fig. 6a shows a flowchart of a first example of a method for connecting a pipe 6 to an offshore structure 2. The method relates to the arrangement 1 disclosed in figures 1-5b. The method comprises the steps of: insertion s101 the pipe 6 in a flexible cover element 4; connecting s102 the pipe 6 to the offshore structure 2; and stiffening s103 the flexible cover element 4 by a stiffener element 12.

Fig. 6b shows a flowchart of a second example of a method for connecting a pipe 6 to an offshore structure 2. The method relates to the arrangement 1 disclosed in figures 1-5b. The step of connecting the pipe 6 to the offshore structure 2 is preceded by the step of insertion s104 of a stiffener element 12 in a defined space 8 between an inner surface 10 of the flexible cover element 4 and the pipe 6.

The step of stiffening s103 the flexible cover element 4 by a stiffener element 12 comprises activating an activating element 14, 43, 45 for stiffening the stiffener element 12.

The step of stiffening s103 the flexible cover element 4 by a stiffener element 12 comprises curing in the stiffener element 12 by a curable substance 14 as an activating element for transforming the stiffener element 12 to the stiff condition.

The person skilled in the art realizes that the present disclosure is not limited to the examples described above. The person skilled in the art further realizes that modifications and variations are possible within the scope of the appended claims.

## Claims

1. A method for connecting a pipe (6) provided with a pipe protection arrangement (1) according to claim 9 to an offshore structure (2), wherein the method comprises the steps of:
insertion (s101) the pipe (6) in a flexible cover element (4);
connecting (s102) the pipe (6) to the offshore structure (2); and
stiffening (s103) the flexible cover element (4) by a stiffener element (12) by transforming the stiffener element (12) from a flexible condition to a stiff condition by mechanical, electrical and/or chemical means.

2. The method according to claim 1, wherein the stiffener element is a type of element being transformable from a flexible condition to a stiff condition.

3. The method according to claim 1 or 2, wherein the step of connecting the pipe (6) to the offshore structure (2) is preceded by the step of:
insertion (s104) of the stiffener element (12) in a defined space (8) between an inner surface (10) of the flexible cover element (4) and the pipe (6).

4. The method according to claim 3, wherein during insertion (s104) of the stiffener element (12) in the defined space (8), the stiffener element has a flexible condition.

5. The method according to any one of the claims 1-4, wherein the step of stiffening (s103) the flexible cover element (4) by a stiffener element (12) comprises activating an activating element (14, 43, 45) for stiffening the stiffener element (12).

6. The method according to any one of the claims 1 - 5, wherein the step of stiffening (s103) the flexible cover element (4) by a stiffener element (12) comprises curing the stiffener element (12) by a curable substance (14) as an activating element for transforming the stiffener element (12) to the stiff condition.

7. The method according to claim 6, wherein the stiffener element is a chemical element, such as a chemical substance or a composition of different chemical substances, wherein curing the stiffener element (12) by the curable substance (14) comprises injecting the curable substance (14) in a defined space (8) between an inner surface (10) of the flexible cover element (4) and the pipe (6).

8. The method according to any one of the claims 3 or 4, wherein the stiffener element is a chemical element, such as a chemical substance or a composition of different chemical substances, wherein the step of stiffening (s103) the flexible cover element (4) by the stiffener element (12) comprises injecting the chemical element together with a curable substance into the defined space.

9. A pipe protection arrangement (1) for connecting a pipe (6) to an offshore structure (2), the arrangement (1) comprising:
a flexible cover element (4) configured to at least partly surround the pipe (6), wherein a flexible cover element (4) is configured to define a space (8) between an inner surface (10) of the flexible cover element (4) and the pipe (6);
a stiffener element (12) inserted in the defined space (8), wherein the stiffener element (12) is transformable from a flexible condition to a stiff condition by mechanical, electrical and/or chemical means; and
an activating element (14, 43, 45) configured to transform the stiffener element (12) from the flexible condition to the stiff condition.

10. The pipe protection arrangement (1) according to claim 9, wherein before the stiffener element (12) is inserted into the defined space (8), the stiffener element has the flexible condition.

11. The pipe protection arrangement (1) according to claim 9 or 10, wherein the activating element is a curable substance (14) configured to transform the stiffener element (12) to the stiff condition.

12. The pipe protection arrangement (1) according to any one of claims 9-11, wherein the stiffener element (12) is shotcrete.

## Patentansprüche

1. Verfahren zum Anschließen eines Rohrs (6), das mit einer Rohrschutzanordnung (1) nach Anspruch 9 für eine Offshore-Struktur (2) bereitgestellt ist, wobei das Verfahren die folgenden Schritte umfasst:
Einsetzen (s101) des Rohrs (6) in ein flexibles Abdeckelement (4);
Anschließen (s102) des Rohrs (6) an die Offshore-Struktur (2); und
Versteifen (s103) des flexiblen Abdeckelements (4) durch ein Versteifungselement (12) durch Umwandeln des Versteifungselements (12) von einem flexiblen Zustand in einen versteiften Zustand durch mechanische, elektrische und/oder chemische Mittel.

2. Verfahren nach Anspruch 1, wobei das Versteifungselement eine Art Element ist, das von einem flexiblen Zustand in einen versteiften Zustand umwandelbar ist.

3. Verfahren nach Anspruch 1 oder 2, wobei dem Schritt des Anschließens des Rohrs (6) an die Offshore-Struktur (2) der folgende Schritt vorausgeht:
Einsetzen (s104) des Versteifungselements (12) in einen definierten Raum (8) zwischen einer Innenfläche (10) des flexiblen Abdeckelements (4) und dem Rohr (6).

4. Verfahren nach Anspruch 3, wobei das Versteifungselement während des Einsetzen (s104) des Versteifungselements (12) in den definierten Raum (8) einen flexiblen Zustand aufweist.

5. Verfahren nach einem der Ansprüche 1-4, wobei der Schritt des Versteifens (s103) des flexiblen Abdeckelements (4) durch ein Versteifungselement (12) Aktivieren eines Aktivierungselements (14, 43, 45) zum Versteifen des Versteifungselements (12) umfasst.

6. Verfahren nach einem der Ansprüche 1-5, wobei der Schritt des Versteifens (s103) des flexiblen Abdeckelements (4) durch ein Versteifungselement (12) Härten des Versteifungselements (12) durch eine härtbare Substanz (14) als ein Aktivierungselement zum Umwandeln des Versteifungselements (12) in den versteiften Zustand umfasst.

7. Verfahren nach Anspruch 6, wobei das Versteifungselement ein chemisches Element ist, wie etwa eine chemische Substanz oder eine Zusammensetzung verschiedener chemischer Substanzen, wobei das Härten des Versteifungselements (12) durch die härtbare Substanz (14) Injizieren der härtbaren Substanz (14) in einen definierten Raum (8) zwischen einer Innenfläche (10) des flexiblen Abdeckelements (4) und dem Rohr (6) umfasst.

8. Verfahren nach einem der Ansprüche 3 oder 4, wobei das Versteifungselement ein chemisches Element ist, wie etwa eine chemische Substanz oder eine Zusammensetzung verschiedener chemischer Substanzen, wobei der Schritt des Versteifens (s103) des flexiblen Abdeckelements (4) durch das Versteifungselement (12) Injizieren des chemischen Elements zusammen mit einer härtbaren Substanz in den definierten Raum umfasst.

9. Rohrschutzanordnung (1) zum Anschließen eines Rohrs (6) an eine Offshore-Struktur (2), wobei die Anordnung (1) Folgendes umfasst:
ein flexibles Abdeckelement (4), das dazu konfiguriert ist, das Rohr (6) mindestens teilweise zu umgeben, wobei ein flexible Abdeckelement (4) dazu konfiguriert ist, einen Raum (8) zwischen einer Innenfläche (10) des flexiblen Abdeckelements (4) und dem Rohr (6) zu definieren;
ein Versteifungselement (12), das in den definierten Raum (8) eingeführt ist, wobei das Versteifungselement (12) durch mechanische, elektrische und/oder chemische Mittel von einem flexiblen Zustand in einen versteiften Zustand umwandelbar ist; und
ein Aktivierungselement (14, 43, 45), das dazu konfiguriert ist, das Versteifungselement (12) von dem flexiblen Zustand in den versteiften Zustand umzuwandeln.

10. Rohrschutzanordnung (1) nach Anspruch 9, wobei das Versteifungselement, bevor das Versteifungselement (12) in den definierten Raum (8) eingesetzt wird, den flexiblen Zustand aufweist.

11. Rohrschutzanordnung (1) nach Anspruch 9 oder 10, wobei das Aktivierungselement eine härtbare Substanz (14) ist, die dazu konfiguriert ist, das Versteifungselements (12) in den versteiften Zustand umzuwandeln.

12. Rohrschutzanordnung (1) nach einem der Ansprüche 9-11, wobei das Versteifungselement (12) Spritzbeton ist.

## Revendications

1. Procédé de raccordement d'un tuyau (6) muni d'un dispositif de protection de tuyau (1) selon la revendication 9 à une structure offshore (2), dans lequel le procédé comprend les étapes suivantes :
l'insertion (s101) du tuyau (6) dans un élément de couverture souple (4) ;
le raccordement (s102) du tuyau (6) à la structure offshore (2) ; et
le raidissement (s103) de l'élément de couverture souple (4) par un élément raidisseur (12) en transformant l'élément raidisseur (12) à partir d'une condition souple à une condition raide par des moyens mécaniques, électriques et/ou chimiques.

2. Procédé selon la revendication 1, dans lequel l'élément raidisseur est un type d'élément pouvant être transformé à partir d'une condition souple à une condition raide.

3. Procédé selon la revendication 1 ou 2, dans lequel l'étape de raccordement du tuyau (6) à la structure offshore (2) est précédée par l'étape de :
l'insertion (s104) de l'élément raidisseur (12) dans un espace défini (8) entre une surface intérieure (10) de l'élément de couverture souple (4) et le tuyau (6).

4. Procédé selon la revendication 3, dans lequel pendant l'insertion (s104) de l'élément raidisseur (12) dans l'espace défini (8), l'élément raidisseur a une condition souple.

5. Procédé selon l'une quelconque des revendications 1 à 4, dans lequel l'étape de raidissement (S103) de l'élément de couverture souple (4) par un élément raidisseur (12) comprend l'activation d'un élément d'activation (14, 43, 45) pour raidir l'élément raidisseur (12).

6. Procédé selon l'une quelconque des revendications 1 à 5, dans lequel l'étape de raidissement (S103) de l'élément de couverture souple (4) par un élément raidisseur (12) comprend le durcissement de l'élément raidisseur (12) par une substance durcissable (14) en tant qu'élément d'activation pour transformer l'élément raidisseur (12) à la condition raide.

7. Procédé selon la revendication 6, dans lequel l'élément raidisseur est un élément chimique, tel qu'une substance chimique ou une composition de différentes substances chimiques, dans lequel le durcissement de l'élément raidisseur (12) par la substance durcissable (14) comprend l'injection de la substance durcissable (14) dans un espace défini (8) entre une surface intérieure (10) de l'élément de couverture souple (4) et le tuyau (6).

8. Procédé selon l'une quelconque des revendications 3 ou 4, dans lequel l'élément raidisseur est un élément chimique, tel qu'une substance chimique ou une composition de différentes substances chimiques, dans lequel l'étape de raidissement (s103) de l'élément de couverture souple (4) par l'élément raidisseur (12) comprend l'injection de l'élément chimique avec une substance durcissable dans l'espace défini.

9. Agencement de protection de tuyau (1) pour raccorder un tuyau (6) à une structure offshore (2), l'agencement (1) comprenant :
un élément de couverture souple (4) configuré pour entourer au moins partiellement le tuyau (6), dans lequel l'élément de couverture souple (4) est configuré pour définir un espace (8) entre une surface intérieure (10) de l'élément de couverture souple (4) et le tuyau (6) ;
un élément raidisseur (12) inséré dans l'espace défini (8), dans lequel
l'élément raidisseur (12) peut être transformé à partir d'une condition souple à une condition raide par des moyens mécaniques, électriques et/ou chimiques ; et
un élément d'activation (14, 43, 45) configuré pour transformer l'élément raidisseur (12) à partir de la condition souple à la condition raide.

10. Agencement de protection de tuyau (1) selon la revendication 9, dans lequel avant que l'élément raidisseur (12) ne soit inséré dans l'espace défini (8), l'élément raidisseur est à la condition souple.

11. Agencement de protection de tuyau (1) selon la revendication 9 ou 10, dans lequel l'élément d'activation est une substance durcissable (14) configurée pour transformer l'élément raidisseur (12) à la condition raide.

12. Agencement de protection de tuyau (1) selon l'une des revendications 9 à 11, dans lequel l'élément raidisseur (12) est du béton projeté.
